# FASCICULE DE BREVET EUROPEEN

(11) **EP 2 040 044 B1**
(45) Date de publication et mention de la délivrance du brevet: **08.02.2017**
(21) Numéro de dépôt: 08164182.1
(22) Date de dépôt: 11.09.2008
(51) Int. Cl.: G01F 15/14, B29C 45/00, G01F 1/115, B29C 45/56, B29C 45/26

(54) **Procédé de fabrication d'un carter de compteur à détection magnétique et carter ainsi obtenu**
Verfahren zur Herstellung eines Zählergehäuses mit magnetischer Erkennung, und so erzeugtes Gehäuse
Method of producing a case of a meter with magnetic detection and case thus obtained

(30) Priorité: 18.09.2007 EP 07301376
(43) Date de publication de la demande: 25.03.2009
(73) Titulaire: Itron Global SARL, Liberty Lake WA 99019 (US)
(72) Inventeur: Schleuniger, Mathias, 75020 Paris (FR)
(74) Mandataire: Howson, Richard G.B.

(56) Documents cités:
- EP-A- 1 405 708
- WO-A-02/01164
- DE-A1- 19 923 932
- DE-U1- 29 806 191
- FR-A1- 2 615 783
- FR-A1- 2 878 777
- JP-A- 61 125 825

## Description

L'invention concerne un procédé de fabrication d'un carter de compteur à détection magnétique et un carter ainsi obtenu.

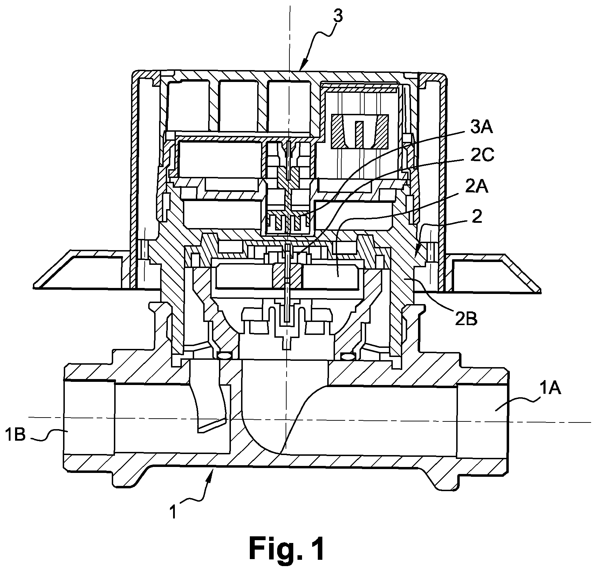

La figure 1 représente un tel compteur connu à détection magnétique destiné à la mesure d'un volume ou d'un débit de fluide, en particulier d'eau.

Ce compteur comporte une bâche 1 en forme d'auge et pourvue d'un tronçon de conduit d'entrée 1A et d'un tronçon de conduit de sortie 1B. Le tronçon de conduit d'entrée 1A est destiné à être connecté à une canalisation d'arrivée d'eau et le tronçon de conduit de sortie 1B à une canalisation d'évacuation d'eau.

Sur cette bâche, est montée une chambre de mesure 2, ici à turbine 2A, contenue dans un carter 1 B. L'axe de la turbine est pourvu d'un premier élément magnétique 2C.

Sur cette chambre de mesure, est disposé un totalisateur 3 qui comporte un afficheur et un compteur connecté à un capteur magnétique 3A destiné à transmettre le nombre de tours de la turbine au compteur.

Pour ce faire, ce capteur 3A est disposé face à l'élément magnétique 2C de la chambre de mesure et est séparé de cet élément 2C par une paroi supérieure du carter 2B qui est amincie au droit de cet agencement magnétique, afin de permettre une bonne transmission du champ magnétique entre l'élément 2C et le capteur 3A.

En effet, une épaisseur trop importante de cette paroi amincie entraîne un entrefer important entre le capteur 3A du totalisateur et l'élément magnétique 2C de la chambre de mesure, formés d'aimants, et nécessite des aimants plus puissants, donc plus chers et surtout plus vulnérables aux tentatives de fraudes par utilisation d'un aimant externe au compteur.

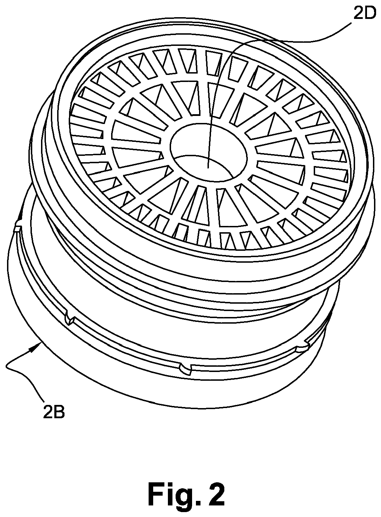

La figure 2 représente un tel carter 2B de chambre de mesure. La paroi supérieure de ce carter présente donc une partie de paroi centrale amincie 2D, dite ci-après paroi de transmission, contre laquelle est logé le capteur magnétique 2C du totalisateur et sous laquelle est disposé l'élément magnétique 2C lié à l'axe de la turbine 2A.

Il est connu de réaliser ce carter 2B en matière plastique, par exemple en polyamide aromatique, par moulage et injection au niveau au centre de la paroi supérieure du carter ainsi moulé, afin d'éviter la formation de lignes de soudure qui seraient préjudiciables à l'étanchéité et à la bonne tenue mécanique du carter soumis à des efforts hydraulique lors du fonctionnement du compteur. Par un tel procédé de moulage, il est possible d'obtenir une paroi de transmission 2D d'une épaisseur d'environ 2,5 mm. Un usinage postérieur peut également permettre de réduire l'épaisseur de la paroi de transmission.

Le but de l'invention est de proposer un procédé de fabrication d'un tel carter qui permette d'obtenir une paroi de transmission d'épaisseur réduite, afin d'assurer une transmission du champ magnétique optimale entre la chambre de mesure et le totalisateur, tout en fournissant un carter résistant mécaniquement aux efforts hydrauliques de fonctionnement du compteur.

Pour ce faire, l'invention propose un procédé de moulage par injection d'un carter, en matière plastique, d'une chambre de mesure d'un compteur à détection magnétique, comportant une paroi dite de transmission, destinée à être disposée entre un élément magnétique contenu par ladite chambre de mesure et un capteur magnétique situé dans un totalisateur, ladite paroi de transmission étant moulée au moyen d'un piston translatable perpendiculairement au plan de la cavité de moulage de cette paroi.

Il est connu du document de brevet JP 61-125825 de réaliser une paroi fine dans un produit formé de résine tel qu'un boîtier pour disque souple ou un corps de bouchage de pile électrique, au moyen d'un piston translatable perpendiculairement au plan de la cavité de moulage.

Selon ce procédé connu, le piston, qui peut être chauffé ou non, est poussé immédiatement après l'injection de résine à l'état demi solidifié ou à l'état solidifié.

Un tel procédé induit des contraintes sur la matière moulée, par compactage et donc dégradation de la matière plastique, et il en résulte une modification des caractéristiques mécaniques initiales de la matière injectée, qui sont problématiques dans le cas de la réalisation d'une paroi de transmission de carter de chambre de mesure de compteur, qui doit, outre ses propriétés de transmission, résister à des pressions hydrodynamiques.

L'invention résout ce problème en proposant un procédé de moulage par injection d'un carter, en matière plastique, d'une chambre de mesure d'un compteur à détection magnétique, qui assure une qualité mécanique parfaite de la matière moulée tout en utilisant un piston de ce type pour réaliser une paroi fine de transmission améliorant la transmission des signaux magnétiques entre la chambre de mesure et la totalisateur d'un compteur.

Pour ce faire, l'invention propose un procédé de moulage par injection d'un carter, en matière plastique, d'une chambre de mesure d'un compteur à détection magnétique, comportant une paroi dite de transmission, destinée à être disposée entre un élément magnétique contenu par ladite chambre de mesure et un capteur magnétique situé dans un totalisateur, ladite paroi de transmission étant moulée au moyen d'un piston translatable perpendiculairement au plan de la cavité de moulage de cette paroi, procédé caractérisé en ce que ledit piston est translaté dans la cavité de moulage au cours de l'injection de la matière plastique dans ladite cavité de moulage. Le piston est translaté dès passage de la matière plastique au droit du piston.

Le piston est donc translaté dans une cavité de moulage qui contient encore de l'air ce qui permet de n'induire aucune contrainte sur la matière plastique.

Ce procédé de moulage permet, sans aucun usinage, la réalisation d'une paroi de transmission d'une épaisseur particulièrement réduite.

De plus, grâce à ce procédé, l'épaisseur de la paroi de transmission est totalement maîtrisée par déplacement du piston.

Le piston peut être translaté, lorsqu'il reste dans ladite cavité de moulage un volume d'air égal ou supérieur au volume du piston dans la dite cavité, en fin de course.

Avantageusement, l'injection est réalisée au moyen d'une entrée d'injection latérale à la cavité de moulage du carter.

L'injection est, de préférence, située hors de la paroi de transmission dans une zone favorisant le remplissage de la cavité par la matière plastique.

L'invention concerne également un carter d'une chambre de mesure d'un compteur à détection magnétique obtenu au moyen du procédé tel que précisé ci-dessus, caractérisé en ce que ladite paroi de transmission a une épaisseur comprise entre 0,5 et 1,5 mm.

Avantageusement, ladite paroi de transmission a une épaisseur d'environ 1,2 mm.

En effet, une telle épaisseur de la paroi de transmission génère un entrefer entre le capteur 3A du totalisateur et l'élément magnétique 2C de la chambre de mesure particulièrement faible et permet d'éviter un phénomène de découplage due à une désynchronisation de ces deux éléments magnétiques formés d'un aimant, en particulier à fort débit et haute vitesse du fluide, en particulier de l'eau dans le compteur.

DE19923932 concerne un compteur d'eau avec mécanisme et l'indicateur de fonctionnement (à sec) dans une chambre à air. L'orifice d'entrée pour le compteur d'eau ainsi que des canaux de fluide sont fabriqués dans le cadre du couvercle de la chambre de mesure. Le couvercle de la chambre de mesure est fabriqué à partir de plastique renforcé de fibre au moyen d'un procédé de moulage par injection de métal.

EP1405708 concerne un procédé de fabrication d'un tube d'un injecteur comprend l'injection de la résine fondue dans la cavité d'un moule métallique; injecter la résine fondue dans une partie cylindrique creuse; et de gavage de la résine à l'intérieur de la partie creuse cylindrique dans la cavité par une tige de poussée installé dans la partie creuse cylindrique lorsque vient la résine fondue à l'état semi-fondu.

WO 02/01164 concerne un dispositif de mesure pour mesurer un débit d'un liquide, l'appareil comprenant un passage à travers laquelle le liquide peut circuler, un élément rotatif monté de façon à s'étendre au moins partiellement dans ledit passage de manière à en rotation par le liquide circulant à travers le passage, des moyens de détection électromagnétique pour détecter la rotation de l'élément rotatif, des moyens de détermination pour déterminer un débit de liquide d'écoulement à travers le passage sur la base de la rotation et des moyens d'affichage détectés pour afficher des informations associées à dit débit déterminé.

DE29806191 concerne un débitmètre pour milieux fluides, en particulier des liquides, permettant son passage dans une chambre de mesure d'un rotor en rotation, par un couplage magnétique avec un compteur à joint tournant, où le couplage magnétique des deux mutuellement coaxiaux, séparés par au moins une cloison non-magnétique de l'autre, chacune.

FR2878777 concerne un procédé de fabrication d'une section à paroi mince dans une pièce de matière plastique moulée par injection comprend la fourniture d'un moule comportant une première moitié de moule, une seconde moitié de moule, et une glissière, qui définissent une cavité de moule.

L'invention est décrite ci-après plus en détail à l'aide de figures ne représentant qu'un mode de réalisation préféré de l'invention.
Les figures 1 et 2 ont été déjà été évoquées et illustrent, vu en coupe, un compteur et, vu en perspective, un carter de chambre de mesure.

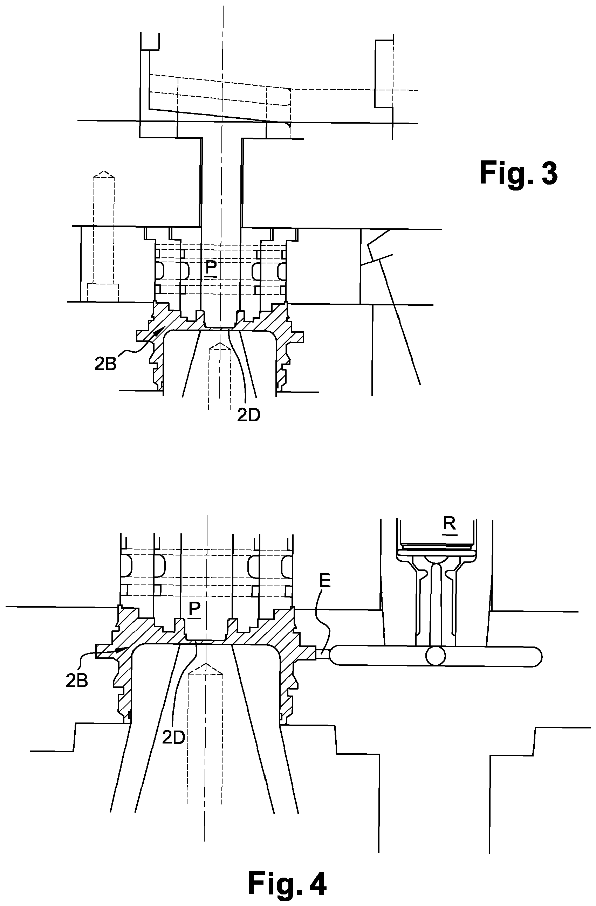

Les figures 3 et 4 sont des vues en coupe d'un appareillage de moulage pour la fabrication d'un carter conforme à l'invention.

Sur ces dernières figures, le moulage est en fin de processus et la cavité de moulage est remplie de matière plastique, par exemple du polyphtalamide, formant un carter 2B.

Le moulage se fait par injection réalisée au moyen d'une entrée d'injection E latérale à la cavité de moulage du carter 2B. Cette entrée E est située à proximité de la cavité de moulage de la paroi supérieure du carter.

La paroi de transmission 2D du carter est moulée au moyen d'un piston P translatable perpendiculairement au plan de la cavité de moulage de cette paroi 2D.

Lors d'une opération de moulage, la matière plastique est injectée sous pression d'un réservoir R vers l'entrée E d'injection et remplit la cavité de moulage du carter. Le piston P est alors dans sa position de repos ne faisant pas saillie dans la cavité de moulage et, lorsque la matière plastique arrive au droit du piston, ce dernier est translaté vers la cavité de moulage, puis est arrêté en position finale de moulage, afin de former une paroi de transmission d'une épaisseur comprise entre 0,5 et 1,5 mm, et de préférence d'environ 1,2 mm.

Le piston est translaté, lorsqu'il reste dans ladite cavité de moulage un volume d'air égal ou supérieur au volume du piston dans la dite cavité, en fin de course.

Selon le positionnement du piston P par rapport à l'entrée d'injection E, la translation du piston peut être commencée entre 1/3 et 9/10 du temps global d'injection.

Lors de l'opération de démoulage conséquente, le piston est reculé afin de permettre le démoulage et la séparation des parties de moule.

## Revendications

1. Procédé de moulage par injection d'un carter (2B), en matière plastique, d'une chambre de mesure (2) d'un compteur à détection magnétique, comportant une paroi dite de transmission (2D), destinée à être disposée entre un élément magnétique (2C) contenu par ladite chambre de mesure et un capteur magnétique (3A) situé dans un totalisateur (3), procédé **caractérisé en ce que** ladite paroi de transmission (2D) est moulée au moyen d'un piston (P) translatable perpendiculairement au plan de la cavité de moulage de cette paroi, ledit piston est translaté dans la cavité de moulage au cours de l'injection de la matière plastique dans ladite cavité de moulage, et le piston est translaté dès passage de la matière plastique au droit du piston.

2. Procédé selon la revendication précédente, **caractérisé en ce que** le piston est translaté, lorsqu'il reste dans ladite cavité de moulage un volume d'air égal ou supérieur au volume du piston dans la dite cavité, en fin de course.

3. Procédé selon l'une des revendications précédentes, **caractérisé en ce que** l'injection est réalisée au moyen d'une entrée d'injection (E) latérale à la cavité de moulage du carter.

4. Carter (2B) d'une chambre de mesure (2) d'un compteur à détection magnétique obtenu au moyen du procédé selon l'une des revendications précédentes, **caractérisé en ce que** ladite paroi de transmission (2D) a une épaisseur comprise entre 0,5 et 1,5 mm.

5. Carter selon la revendication précédente, **caractérisé en ce que** ladite paroi de transmission (2D) a une épaisseur d'environ 1,2 mm.

## Patentansprüche

1. Spritzgussverfahren eines Gehäuses (2B) aus Kunststoff, einer Messkammer (2) eines Zählers mit magnetischer Erfassung, der eine sogenannte Übertragungswand (2D) umfasst, die dazu bestimmt ist, zwischen einem magnetischen Element (2C), das in der Messkammer enthalten ist, und einem magnetischen Sensor (3A), der in einem Summierer (3) liegt, angeordnet zu sein, Verfahren **dadurch gekennzeichnet, dass** die Übertragungswand (2D) mittels eines Kolbens (P) geformt wird, der senkrecht zu der Ebene des Formhohlraums dieser Wand verschiebbar ist, wobei der Kolben in dem Formhohlraum im Laufe des Einspritzens des Kunststoffs in den Formhohlraum verschoben wird, und der Kolben ab der Passage des Kunststoffs im rechten Winkel zu dem Kolben verschoben wird.

2. Verfahren nach dem vorhergehenden Anspruch, **dadurch gekennzeichnet, dass** der Kolben verschoben wird, wenn in dem Formhohlraum ein Luftvolumen gleich oder größer als das Volumen des Kolbens in dem Hohlraum am Hubende verbleibt.

3. Verfahren nach einem der vorhergehenden Ansprüche, **dadurch gekennzeichnet, dass** das Einspritzen mittels eines Einspritzeingangs (E) seitlich an dem Formhohlraum des Gehäuses ausgeführt wird.

4. Gehäuse (2B) einer Messkammer (2) eines Zählers mit magnetischer Erfassung, das mittels des Verfahrens nach einem der vorhergehenden Ansprüche erhalten wird, **dadurch gekennzeichnet, dass** die Übertragungswand (2D) eine Stärke zwischen 0,5 und 1,5 mm hat.

5. Gehäuse nach dem vorhergehenden Anspruch, **dadurch gekennzeichnet, dass** die Übertragungswand (2D) eine Stärke von etwa 1,2 mm hat.

## Claims

1. Method of injection moulding a housing (2B), made from plastic material, of a measurement chamber (2) of a meter with magnetic detection, comprising a wall known as a transmission wall (2D), intended to be arranged between a magnetic element (2C) contained by said measurement chamber and a magnetic sensor (3A) situated in a totaliser (3), **characterised in that** said transmission wall (2D) is moulded by means of a piston (P) which is movable in translation perpendicular to the plane of the mould cavity of this wall, said piston is moved in translation in the mould cavity in the course of the injection moulding of the plastic material in said mould cavity, and the piston is moved in translation as soon as the plastic material moves at right angles to the piston.

2. Method according to the preceding claim, **characterised in that** the piston is moved in translation when a volume of air remaining in said mould cavity is equal to or greater than the volume of the piston in said cavity at the end of the stroke.

3. Method according to one of the preceding claims, **characterised in that** the injection moulding is carried out by means of an injection side gate (E) on the mould cavity of the housing.

4. Housing (2B) of a measurement chamber (2) of a meter with magnetic detection obtained by means of the method according to one of the preceding claims, **characterised in that** said transmission wall (2D) has a thickness between 0.5 and 1.5 mm.

5. Housing according to the preceding claims, **characterised in that** said transmission wall (2D) has a thickness of approximately 1.2 mm.
